# EUROPEAN PATENT SPECIFICATION

(11) **EP 1 084 206 B1**
(45) Date of publication and mention of the grant of the patent: **03.07.2002**
(21) Application number: 99920681.6
(22) Date of filing: 16.04.1999
(51) Int. Cl.: C09J 177/00, C09J 167/00, C09J 151/06, C09D 167/00, C09D 177/00, C09D 151/06, B05D 5/10, B05D 7/14, B32B 15/06

(54) **METAL REINFORCED THERMOPLASTIC ELASTOMERS**
METALLVERSTÄRKTE THERMOPLASTISCHE ELASTOMERE
ELASTOMERES THERMOPLASTIQUES A RENFORT METALLIQUE

(30) Priority: 23.04.1998 US 82807 P
(43) Date of publication of application: 21.03.2001
(73) Proprietor: Advanced Elastomer Systems, L.P., Akron, Ohio 44311-1059 (US); N.V. BEKAERT S.A., 8550 Zwevegem (BE)
(72) Inventor: OUHADI, Trazollah, B-4020 Liège (BE); ARKENS, Oger, B-3001 Leuven (BE); MAUER, Daniel, B-7320 Bernissart (BE)
(74) Representative: Weber, Thomas, Dr.Dipl.-Chem.
(86) International application number: EP9902557
(87) International publication number: WO9955793

(56) References cited:
- EP-A- 0 335 642
- EP-A- 0 422 229
- EP-A- 0 422 392
- US-A- 4 358 493
- US-A- 4 690 856
- US-A- 5 322 908
- US-A- 5 348 804
- PATENT ABSTRACTS OF JAPAN vol. 016, no. 298 (C-0958), 2 July 1992 (1992-07-02) & JP 04 081486 A (MITSUI TOATSU CHEM INC), 16 March 1992 (1992-03-16)

## Description

The present invention relates to a metal element comprising a metal substrate being coated with an outer layer of a tie-layer adhesive having excellent adhesion to thermoplastic elastomers and a thermoplastic elastomer (TPE) article being reinforced with said metal element.

### Background of the Invention

Thermoplastic elastomers had a very significant market growth during the last ten years in various fields of application. The market demands for reinforced and, in particular, metal reinforced TPE articles for a broad area of applications has increased significantly. In detail high strength reinforced articles such as hoses, conveyor-belts, timing-belts, V-belts, hoisting cables, handrails, hose couplings, sheet linings, snap-on profiles, steel wire or steel cord reinforced elastomer strips became very important.

One of the most critical problems to be solved is to achieve excellent adhesion between the metallic reinforcing element and the TPE because the adhesion between metal surfaces and TPEs without any adhesion improving layer is poor.

According to the prior art adhesion improving layers are formed from solvent-based adhesives. Applying the adhesive composition to the metal surface consequently involves the step of drying the adhesive layer by eliminating, i.e., evaporating the solvent prior to applying the thermoplastic elastomer. Commonly used solvents for the solution of the adhesive are selected from halogenated solvents as well as solvents which have a high boiling-point.

A typical example for solvent-based adhesive is disclosed in JP-A-09001733 (Chemical Abstracts No. 126:172752) according to which the solvent dispersible/solvent-soluble adhesive composition is coated on the metal substrate, followed by the steps of baking and drying prior to bringing the coated substrate in contact with the thermoplastic elastomer.

Typically the solvent-based adhesives are selected from polyurethane-based adhesives (with isocyanate hardeners), modified polyolefins such as epoxidized or halogenated polypropylenes, and alkyl-alpha-cyano acrylate based adhesives.

Thus it is an object of the present invention to provide a metal element which is fully or partially coated with an outer layer which functions as a tie-layer adhesive for thermoplastic elastomers, wherein said outer layer is coated on the metal substrate in a solvent-free process adhesive system.

It is another object of the present invention to provide a method for making said metal element.

It is further object of the present invention to provide a method for adhering a thermoplastic elastomer to a metal surface using an adhesive which method does not involve the use of solvents for said adhesive.

It is a still further object to provide articles in which a thermoplastic elastomer is adhered to the surface of a metal element using an adhesive which is solvent-free and which thermoplastic elastomer exhibits good adhesion to the metal substrate.

In particular it is an object of the present invention to provide an article comprising a thermoplastic elastomer wherein said thermoplastic elastomer is reinforced with a metal element, i.e., to provide a reinforced thermoplastic elastomer article and a method for its production.

### Summary of the Invention

The present invention relates to a metal element comprising a metal substrate being fully or partially coated with an outer layer comprising
(i) a functionalized polymer containing functional groups selected from carboxylic acids or anhydrides, epoxy groups, amino groups, oxazoline groups and hydroxy groups; and
(ii) a compound selected from copolyamides, copolyesters, and polyamides or blends thereof,
wherein a primer coating is interposed between the surface of the metal substrate and the coating layer comprising (i) and (ii), and wherein the primer coating comprises a compound selected from organo functional silanes, organo functional titanates and organo functional zirconates.

Furthermore the present invention relates to a method of making the fully or partially coated metal element as defined above comprising the steps of
(a) optionally cleaning the surface of the uncoated metal substrate;
(b) treating the metal substrate with a primer;
(c) solvent-free applying
   (i) a functionalized polymer containing functional groups selected from carboxylic acids or anhydrides, epoxy groups, amino groups, oxazoline groups and hydroxy groups; and
   (ii) a compound selected from copolyamides, copolyesters, and polyamides or blends thereof;
individually or sequentially or in the form of a blend to the surface of said metal substrate.

Additionally, the present invention relates to an article comprising the metal element as defined above and a thermoplastic elastomer in contact with the outer layer of said metal element. In one preferred embodiment the present invention relates to a thermoplastic elastomer article being reinforced with the metal element described above.

Furthermore, the present invention relates to a method for adhering a thermoplastic elastomer to the surface of a metal substrate comprising solvent-free coating on said surface a tie-layer as defined above,
prior to adhering the coated metal substrate to the thermoplastic elastomer wherein the surface of said metal element has been pretreated with a primer compound selected from organo functional silanes, organo functional titanates and organo functional zirconates. In one preferred embodiment the coated metal substrate is embedded or partially embedded into the thermoplastic elastomer.

### Detailed Description of the Invention

### Adhesive Tie-Layer

According to the present invention the outer layer on the metal element takes the function of an adhesive tie-layer in case that a thermoplastic elastomer is adhered to it, for instance, when forming metal reinforced thermoplastic elastomer articles. In addition the outer layer itself has a protective effect on the coated metal substrate, resulting in improved mechanical properties and protection against corrosion.

Said coating layer forms a coating on the metal substrate having a coating thickness of 5 to 500 µm, preferably 10 to 250 µm, more preferably 15 to 100 µm. In most cases less than 50 µm are suitable.

### 1. Functionalized Polymers (i)

According to the present invention the functionalized polymer comprised in the outer layer/adhesive tie-layer is selected from functionalized polyolefins and functionalized block-copolymers of styrene/ conjugated diene/styrene. In the functionalized block-copolymers of styrene/conjugated diene/styrene the conjugated diene may be hydrogenated, non-hydrogenated or partially hydrogenated.

The functionalized polyolefins are based on thermoplastic, crystalline polyolefin homopolymers and copolymers. They are desirably prepared from α-monoolefin monomers having 2 to 7 carbon atoms such as ethylene, propylene, 1-butene, isobutylene, 1-pentene, 1-hexane, 1-octane, 3-methyl-1-pentene, 4-methyl-1-pentene, 5-methyl-1-hexane, mixtures thereof and copolymers thereof with (meth)acrylates and/or vinyl acetates. Preferred, however, are monomers having 3 to 6 carbon atoms, with propylene being preferred. As used in the specification and claims the term polypropylene includes homopolymers of propylene as well as reactor copolymers of polypropylene which can contain 1 to 50 weight % of ethylene or a random copolymer of a C₃ or C₂ olefin with or without a termonomer selected from an α-olefin of 4 to 16 carbon atoms, and mixtures thereof. The polypropylene can be highly crystalline isotactic or syndiotactic polypropylene. Commercially available polyolefins may be used in the practice of the invention. Further preferable among the polyolefins are low-density polyethylene, linear low-density polyethylene, medium- and high-density polyethylene as well as ethylene-vinylacetate copolymer (EVA), ethylene-acrylic acid copolymer (EAA) and their ionomeric derivatives, such as the Zn- and Na-containing salts, and ethylene-(meth)acrylate copolymer, such as EMA.

In the block-copolymers of styrene/conjugated diene/styrene, which are traditionally made by anionic polymerization and in which the conjugated diene may be hydrogenated, non-hydrogenated or partially hydrogenated, the conjugated diene is selected from butadiene, isoprene or a mixture of both. Specific block-copolymers of the styrene/conjugated diene/styrene-type are SBS, SIS, SIBS, SEBS and SEPS block-copolymers.

The functionalized polymers contain one or more functional groups which have been incorporated either by grafting or by copolymerization. Preferably the functionalized polymers used in this invention are those obtained by grafting at least one kind of functional group-forming (functional group-containing) monomer on the polymer backbone, which is, as mentioned above, selected from the polyolefins. It is preferred, however, to use one kind of functional group-forming monomer.
The functional group-forming monomers are selected from unsaturated carboxylic acids, dicarboxylic acids or their derivatives such as their anhydrides, oxazoline- or epoxy-group containing unsaturated monomers, or amino- or hydroxy-group containing unsaturated monomers.

Examples of the of the above-mentioned unsaturated carboxylic and dicarboxylic adds are those having 3 to 20 carbon atoms per molecule such as acrylic acid, methacrylic acid, maleic add, fumaric acid and itaconic acid or derivatives thereof.

Unsaturated dicarboxylic acid monomers having 4 to 10 carbon atoms per molecule and anhydrides (if they exist) thereof are the preferred grafting monomers. These grafting monomers include for example, maleic acid, fumaric acid, itaconic add, citraconic acid, cyclohex-4-ene-1,2-dicarboxylic add, bicyclo[2.2.1]hept-5-ene-2,3-dicarboxylic add, maleic anhydride, itaconic anhydride, citraconic anhydride, allylsuccinic anhydride, 4-methylcyclohex-4-ene-1,2-dicarboxylic anhydride and bicyclo[2.2.1]hept-5-ene-2,3-dicarboxylic anhydride, and the like.

Examples of oxazoline-group containing unsaturated monomers are oxazole, ricinoloxazoline maleinate, vinyloxazoline, 2-isopropenyl-2-oxazoline, and the like.
Further grafting monomers are epoxy-group containing esters of unsaturated carboxylic acids containing at least 6, preferably 7 carbon atoms. Particularly preferred are glycidyl acrylate and glycidyl methacrylate; other grafting monomers are hydroxy-group containing products such as hydroxy-group containing esters of unsaturated carboxylic acids containing at least 5 carbon atoms such as 2-hydroxyethylmethacrylate, 2-hydroxyethylacrylate, hydroxypropylmethacrylate, hydroxypropylacrylate.

Polyolefins with amine functional groups made by further reaction of polyolefins containing carboxylic acids or their anhydrides groups as well as epoxy groups described above with a polyamine containing at least two amino groups such as diamines, triamines, tetramines, derivatives such as 3-amine-1-methylaminopropane, piperazine, or members of the polyoxyalkyleneamines family (known under the tradename Jeffamine^{R} obtainable from Texaco Chemical Company). The polyamines contain at least 2 carbon atoms, preferably between 4 to 20 carbon atoms.

The carboxylic acid function of the polymer can be neutralized partially or totally with a base like sodium hydroxide, lithium hydroxide, ammonium hydroxide, zinc hydroxide, magnesium hydroxide or other type of base under the formation of the corresponding carboxylic acid salt.

Examples of the hydroxy-group containing monomers are reaction products of primary or secondary amino-alcohols (primary or secondary amine) with an anhydride of an unsaturated carboxylic acid as mentioned above. Said primary or secondary amino group containing alcohols contain at least 2 carbon atoms, preferably between 4 and 20 carbon atoms.

Various known methods can be used to graft the grafting monomer to the basic polymer. For example, this can be achieved by heating the polymer and the grafting monomer at high temperatures of from 150 °C to 300 °C in the presence or absence of a solvent with or without a radical initiator. Another vinyl monomer may be present during the grafting reaction. Suitable solvents that may be used in this reaction include benzene, toluene, xylene, chlorobenzene and cumene. Suitable radical initiators that may be used include t-butyl hydroperoxide, diisopropylbenzene hydroperoxide, di-t-butyl peroxide, t-butyl cumyl peroxide, acetyl peroxide, benzoyl peroxide, isobutyryl peroxide and methylethyl ketone peroxide.

The functionalized polymer can also be made by copolymerization of the functional group-containing monomer with the monomers mentioned above in connection with the polyolefins.

In the functionalized polymer thus obtained, the amount of the functional group-forming monomer is not less than 0.2%, preferably 0.2 to 10 %, more preferably 0.3 to 5 %, and most preferably at least 1 weight %, based on the weight of the functionalized polymer.

### 2. Compounds (ii)

The compounds (ii) which are used in combination with the functionalized polymers (ii) are selected from the group consisting of copolyamide hot melts, copolyester hot-melts, polyamides or blends thereof.

Suitable copolyamide hot-melts are selected from the group consisting of copolyamide hot-melts which are known as hot-melt adhesives. These copolyamide hot melts are well known in the art and typically have a number average molecular weight of up to 20,000, preferably between 500 and 15,000. Suitable copolyamide hot-melt adhesives are commercially available under the tradenames Vestamelt^{R} (Hüls), Euremelt^{R} (Witco), Griltex^{R} (EMS), etc.

Suitable copolyester hot melts are selected from the group consisting of copolyester hot-melts which are known as hot-melt adhesives. These copolyester hot-melts are well known in the art and typically have a number average molecular weight of up to 20,000, preferably between 500 and 15,000. Suitable copolyester hot-melt adhesives are commercially available under the tradenames Vestamelt^{R} (Hüls) and Griltex^{R} (EMS) Euremelt (Witco), etc.

The polyamides which can be used as the tie-layer adhesive according to the present invention are preferably selected from polymers of ε-caprolactam, aminocaproic acid, enantholactam, 7-amino-heptanoic acid, 11-aminoundecanoic acid, or polymers obtained by polycondensation of diamines (such as butanediamine, hexamethylenediamine, nonamethylenediamine, undecamethylenediamine, dodecamethylenediamine, m-xylenediamine, etc.) with dicarboxylic acids (such as terephthalic acid, isophthalic acid, adipic acid, sebacic acid, dodecanedibasic acid, glutaric acid, etc.), copolymers thereof or blends thereof. Specific examples indude aliphatic polyamide resins (such as polyamide 4.6, polyamide 6, polyamide 6.6, polyamide 6.10, polyamide 11, polyamide 12, and polyamide 6.12) and aromatic polyamide resins (such as poly(hexamethylenediamine terephthalamide), poly(hexamethylene isophthalamide), xylene group-containing polyamides and amorphous polyamide). Among them, polyamide 6, polyamide 4.6, polyamide 6.6, polyamide 6.10, polyamide 11, polyamide 12 and polyamide 6.12 are preferred.

In the outer layer/adhesive tie-layer the amount of the functionalized polymer (i) is from 10 to 90% by weight, preferably from 30 to 70% by weight and more preferably from 40 to 60% by weight, based on the total amount of compounds (i) and (ii). The compounds (i) and (ii) can be applied to the outer surface of the metal substrate as a blend or individually and successively.

### 3. Thermoplastic Elastomer

The term "thermoplastic elastomer" (TPE) in general defines blends of polyolefins and rubbers in which blends the rubber phase is not cured, i.e., so called thermoplastic olefins (TPO), blends of polyolefins and rubbers in which blends the rubber phase has been partially or fully cured by a vulcanization process to form thermoplastic vulcanizates (TPV), or unvulcanized block-copolymers or blends thereof.

According to the present invention the thermoplastic elastomer is selected from
(A)
   (a) a thermoplastic polyolefin homopolymer or copolymer, and
   (b) an olefinic rubber which is fully crosslinked, partially crosslinked or not crosslinked, and optionally
   (c) common additives;
(B)
   (a) a block-copolymer of styrene/conjugated diene/styrene and/or its fully or partially hydrogenated derivative, optionally compounded with
   (b) a thermoplastic polyolefin homopolymer or copolymer and/or
   (c) common additives
   and
(C) any blend of (A) and (B).

### Thermoplastic Elastomer (A)

### Thermoplastic Polyolefin

Polyolefins suitable for use in the compositions (A), (B) or (C) of the invention include thermoplastic, crystalline polyolefin homopolymers and copolymers. They are desirably prepared from monoolefin monomers having 2 to 7 carbon atoms, such as ethylene, propylene, 1-butene, isobutylene, 1-pentene, 1-hexene, 1-octene, 3-methyl-1-pentene, 4-methyl-1-pentane, 5-methyl-1-hexene, mixtures thereof and copolymers thereof with (meth)acrylates and/or vinyl acetates. Preferred, however, are monomers having 3 to 6 carbon atoms, with propylene being preferred. As used in the specification and claims the term polypropylene includes homopolymers of propylene as well as reactor and/or random copolymers of polypropylene which can contain 1 to 30 wt% of ethylene and/or an a-olefin comonomer of 4 to 16 carbon atoms, and mixtures thereof. The polypropylene can be highly crystalline isotactic or syndiotactic polypropylene. Commercially available polyolefins may be used in the practice of this invention. Further polyolefins which can be used in terms of the invention are high, low, linear-low, very low-density polyethylenes and copolymers of ethylene with (meth)acrylates and/or vinyl acetates.

The polyolefins mentioned above can be made by conventional Ziegler/Natta catalyst-systems or by single-site catalyst-systems.

The amount of polyolefin found to provide useful compositions (A) is generally from 8 to 90 weight percent, under the proviso that the total amount of polyolefin (a) and rubber (b) is at least 35 weight percent, based on the total weight of the polyolefin (a), rubber (b) and optional additives (c). Preferably, the polyolefin content will range from 10 to 60 percent by weight.

### Olefinic Rubber

Suitable monoolefin copolymer rubbers comprise non-polar, rubbery copolymers of two or more α-monoolefins, preferably copolymerized with at least one polyene, usually a diene. Saturated monoolefin copolymer rubber, for example ethylene-propylene copolymer rubber (EPM) can be used. However, unsaturated monoolefin rubber such as EPDM rubber is more suitable. EPDM is a terpolymer of ethylene, propylene and a non-conjugated diene. Satisfactory non-conjugated dienes include 5-ethylidene-2-norbomene (ENB); 1,4-hexadiene; 5-methylene-2-norbornene (MNB); 1,6-octadiene; 5-methyl-1,4-hexadiene; 3,7-dimethyl-1,6-octadiene; 1,3-cyclopentadiene; 1,4-cyclohexadiene; dicydopentadiene (DCPD) and vinyl norbornene (VNB).

Butyl rubbers are also useful in the compositions of the invention. As used in the specification and claims, the term "butyl rubber" includes copolymers of an isoolefin and a conjugated monoolefin, terpolymers of an isoolefin with or without a conjugated monoolefin, divinyl aromatic monomers and the halogenated derivatives of such copolymers and terpolymers.

The useful butyl rubber copolymers comprise a major portion of isoolefin and a minor amount, usually less than 30 wt%, of a conjugated multiolefin. The preferred copolymers comprise 85-99.5 wt% of a C₄₋₇ isoolefin such as isobutylene and 15-0.5 wt% of a multiolefin of 4-14 carbon atoms, such as isoprene, butadiene, dimethyl butadiene and piperylene. Commercial butyl rubber, chlorobutyl rubber, bromobutyl rubber, useful in the invention, are copolymers of isobutylene and minor amounts of isoprene with less than 3% halogen for the halobutyl-derivatives. Other butyl co- and terpolymer rubbers are illustrated by the description in US-A-4 916 180.

Another suitable copolymer within the scope of the olefinic rubber of the present invention is a copolymer of a C₄₋₇ isomonoolefin and a para-alkylstyrene, and preferably a halogenated derivative thereof. The amount of halogen in the copolymer, predominantly in the para-alkylstyrene, is from 0.1 to 10 wt%. A preferred example is the brominated copolymer of isobutylene and para-methylstyrene. These copolymers are more fully described in US-A-5 162 445.

A further olefinic rubber suitable in the invention is natural rubber. The main constituent of natural rubber is the linear polymer cis-1,4-polyisoprene. It is normally commercially available in the form of smoked sheets and crepe. Synthetic polyisoprene can also be used. Furthermore polybutadiene rubber and styrene-butadiene-copolymer rubbers can also be used.

Blends of any of the above olefinic rubbers can be employed, rather than a single olefinic rubber.

Further suitable rubbers are nitrile rubbers. Examples of the nitrile group-containing rubber include a copolymer rubber comprising an ethylenically unsaturated nitrile compound and a conjugated diene. Further, the copolymer rubber may be one in which the conjugated diene units of the copolymer rubber are hydrogenated.
Specific examples of the ethylenically unsaturated nitrile compound include acrylonitrile, α-chloroacrylonitrile, α-fluoroacrylonitrile and methacrylonitrile. Among them, acrylonitrile is particularly preferable.

Examples of the conjugated diene include 1,3-butadiene, 2-chlorobutadiene and 2-methyl-1,3-butadiene (isoprene). Among them, butadiene is particularly preferable.
Especially preferred nitrile rubbers comprise copolymers of 1,3-butadiene and 10 to 50 percent of acrylonitrile.

Other suitable rubbers in terms of the present invention are based on polychlorinated butadienes such as polychloroprene rubber. These rubbers are commercially available under the trade names Neoprene® and Bayprene®.

In preparing the compositions of the invention, the amount of rubber in composition (A) generally ranges from 70 to 10 weight percent, under the proviso that the total amount of polyolefin (a) and rubber (b) is at least 35 weight %, based on the weight of the polyolefin (a), the rubber (b) and the optional additives (c). Preferably, the olefinic rubber content will be in the range of from 50 to 10 weight percent.

### Vulcanization

If cured, the process of dynamically curing the rubber in the polyolefin matrix is employed. The process of dynamically curing the rubber in a polyolefin matrix is well known in the art. Early work found in US-A-3,037,954 discloses the technique of dynamic vulcanization wherein a vulcanizable elastomer is dispersed into a resinous thermoplastic polymer and the elastomer is cured in the presence of a curative while continuously mixing and shearing the polymer blend. The resulting composition [dynamically vulcanized alloy, or thermoplastic vulcanizate (TPV)] is a microgel dispersion of cured elastomer in an uncured matrix of thermoplastic polymer. Since then the technology has advanced significantly. For further general background information it is referred to EP-A-0 473 703, EP-A-0 657 504 and WO-A-95/25380.

The elastomer (rubber) component of the TPV can be uncured, partially or fully vulcanized (crosslinked). Those ordinarily skilled in the art will appreciate the appropriate quantities, types of cure systems and vulcanization conditions required to carry out the vulcanization of the rubber. The elastomer can be vulcanized using varying amounts of curative, varying temperatures and varying time of cure in order to obtain the optimum crosslinking desired. Any known cure system can be used, so long as it is suitable under the vulcanization conditions for the elastomer or combination of elastomers being used and is compatible with the thermoplastic polyolefin component of the TPV. These curatives include sulfur, sulfur donors, metal oxides, phenolic resin systems, maleimides, peroxide-based systems, high energy radiation and the like, both with and without accelerators and co-agents.

Another curing system which can be used is the hydrosilylation system which consists of the use of a silicon hydride curative catalyzed with a platinum or rhodium derivative. Such systems are disclosed, for instance, in EP-A-0776937.
Phenolic resin curatives are preferred for the preparation of the TPV composition of the invention, and such cure systems are well known in the art and literature of vulcanization of elastomers. Their use in TPV compositions is more fully described in US-A-4,311,628.
Usually 5 to 20 weight parts of the curative or curative system are used per 100 weight parts of the rubber to be cured.

### Thermoplastic Elastomer (B)

Another thermoplastic elastomer (B) is a block-copolymer of styrene/conjugated diene/styrene, with the conjugated diene optionally being fully or partially hydrogenated, or mixtures thereof. Generally this block-copolymer may contain 10 to 50 weight %, more preferably 25 to 35 weight % of styrene and 90 to 50 weight %, more preferably 75 to 35 weight % of the conjugated diene, based on said block-copolymer. Most preferably, however, is a block-copolymer which contains 30 weight % of styrene and 70 weight % of the conjugated diene. The conjugated diene is selected from butadiene, isoprene or mixtures thereof. Specific block-copolymers of the styrene/conjugated diene/styrene-type are SBS, SIS, SIBS, SEBS and SEPS block-copolymers. These block-copolymers are known in the art and are commercially available.

Optionally the block-copolymer may further be compounded with a polyolefin or a common additive or mixtures thereof. Thus, the thermoplastic elastomer (B) optionally further comprises up to 60 weight % of (b) the thermoplastic polyolefin homopolymer or copolymer or the additives or mixtures thereof, based on the total weight of the block-copolymer (a) and (b). Preferably, the thermoplastic elastomer (B) comprises at least 10 weight % of the thermoplastic polyolefin. The thermoplastic polyolefins are selected from those mentioned above in context with the thermoplastic elastomer (A).

### Thermoplastic Elastomer (C)

Other thermoplastic elastomers which can be modified with modifier mentioned herein below are blends of the thermoplastic elastomer (A) comprising the polyolefin, rubber and optionally additives with the thermoplastic elastomer (B) comprising the block-copolymer, optionally polyolefins and/or additives.

Preferred blends (C) contain 5 to 95 weight % of (A) and 95 to 5 weight % of (B) respectively, based on the total amount of (A) and (B). These blends can be prepared by common blending-processes known in the art.

### Additives

The thermoplastic elastomer may contain reinforcing and non-reinforcing fillers, plasticizers, antioxidants, stabilizers, rubber processing oil, extender oils, lubricants, antiblocking agents, antistatic agents, waxes, foaming agents, pigments, flame retardants and other processing aids known in the rubber compounding art. Such additives can comprise up to 40 wt%, preferably up to 20 wt% of the total compatibilized blend. Fillers and extenders which can be utilized include conventional inorganics such as calcium carbonate, clays, silica, talc, titanium dioxide or carbon black. The rubber processing oils generally are paraffinic, naphthenic or aromatic oils derived from petroleum fractions. The oils are selected from those ordinarily used in conjunction with the specific rubber or rubbers present in the composition.

### 4. Metal Substrate

The metal substrate of the tie-layer coated metal element according to the present invention may be made of any metal or metal alloy. Preferably, the metals or metal alloys are selected from iron, steel, titanium, aluminum or Fe/Cr/Ni.

The steel, preferably in the form of a wire is either plain carbon steels, micro-alloyed steels, or stainless steels. In the carbon steels and the micro-alloyed steels the carbon content ranges between 0.40% and 1.2% by weight. Tensile strengths may range up to 4000 MPa or higher. Additionally, the steel wires may be plated or not. Very often, steel surface is phosphatized with a composition comprising Zn and Fe phosphates.

Brass plating, for instance, α-brass plating comprises 60% to 70% copper and 40% to 30% zinc. The brass plating is conveniently applied to the steel wire by means of a conventional thermodiffusion process comprising electrodeposition of copper, electrodeposition of zinc, followed by a thermal diffusion step. The brass plating thickness varies between 0.18 and 1.0 µm.

Bezinal^{R} plating comprises 90% to 98% zinc, 2% to 10% aluminum and traces of a mischmetal (e.g., cerium or lanthanum) as wetting agent in an amount up to 0.1%. The optimal composition is in the neighborhood of the eutecticum: 95% Zn and 5% Al. The Bezinal^{R} plating may be applied by a hot dip process.

A conventional zinc plating can be applied either by a hot dip process or by an electro-deposition process.

The wire can be provided with a Zn-Sn plating (40% to 66% of Sn). The zinc and the tin are sequentially plated by an electro-deposition process.

The wire can also be provided with a Sn-Zn coating (10% to 90% Sn). The tin and the zinc can be sequentially plated by an electro-deposition process or the alloy can directly be plated to the wire.

In addition to the above-mentioned platings the surface of the wire or cord can be plated with chromium or molybdene either by a direct process or by an electro-deposition process. The plating processes are conventional state of the art processes.

Prior to applying the outer coating/adhesive tie-layer to the metal substrate the surface of the metal substrate is treated with a primer (or "coupling agent") selected from organo functional silanes, organo functional titanates and organo functional zirconates which are known in the art for said purpose. The organo functional silane primers are selected from compounds of the following formula:

Y-(CH₂)ₙ-SiX₃

wherein
- Y: represents an organo functional group selected from -NH₂, CH₂=CH-, CH₂=C(CH₃)COO-, 2,3-epoxypropoxy, HS- and, Cl-;
- X: represents a silicon functional group selected from -OR, -OC(=O)R', -Cl wherein R and R' are independently be selected from C₁-C₄ alkyl, preferably -CH₃ and -C₂H₅; and
- n: is an integer from 0 and 20, preferably from 0 to 10 and most preferably from 0 to 3.

The organo functional silanes described above are commercially available products. They are available, for instance, under the tradename Dynasylan^{R}.

The organo functional titanate primers are selected from compounds of the following formula:

R"ₘ M R'''₍₄₋ₘ₎

wherein
- m: is an integer from 1 to 3, preferably 2 or 3;
- R": represent a functional group selected from CH₂=CHOO-, CH₂=(CH₃)COO- and 2,3-epoxypropoxy;
- R"': represents a straight or branched alkyl group containing 1 to 6, preferably up to 4 carbon atoms; and
- M: represents Ti or Zr.

A preferred organo functional titanate primer is [CH₂=C(CH₃)COO]₃TiOCH(CH₃)₂ (methacrylate titanate commercially available as TTN-33 from the Kenrich Company).

The metal substrate and consequently the metal element comprising said substrate and the tie-layer coating may have any shape and preferably, in case that the metal element is to be used as a reinforcing element in TPEs, has an elongation shape, i.e., the metal element forms an elongated reinforcing element. By the term "elongated" element there is meant a metal element having at least one cross-sectional dimension which is more than ten times smaller than its length. Thus, the reinforcing element can be in the form of a plate, sheet, strip, band, wire, fiber, filament, cord (twisted or untwisted), rope, strand or cable. The transverse cross-section of said reinforcing element may be circular, rectangular, elliptical, flat, etc.

In case that the metal substrate is circular in cross-section, i.e., it is in the form of a filament, wire and, depending on the application it may have any diameter. For several applications a diameter from 0.05 to 1.20 mm is appropriate.

Prior to embedding or partially embedding said metal element into the TPE the surface of the primed metal substrate, for instance, the wire, cord, etc., is coated with compounds (i) and (ii) described above. The coating of the metal surface of said metal substrate is effected in the absence of any solvent by extrusion, co-extrusion, dipping and powder-coating the compounds (i) and (ii) as a blend or individually on the surface of said metal substrate by conventional, state of the art procedures. The blends of compounds (i) and (ii) can be made by tumble-blending or melt-mixing. The blends can be prepared prior to applying them to the (optionally primed) metal surface.

### Reinforced Article

The reinforced article according to the present invention may be of any shape and may be a hose, cable, conveyor-belt, timing-belt, V-belt, hoisting cable, handrail, heating element, hose coupling, sheet-lining, timing-belt, snap-on profile, steel wire, steel cord, cut-resistant flexible protective strips, reinforced elastomer strips, for instance, for use in energy absorbing laminates for use in, e.g., skis.

In the reinforced articles according to the present invention, the adhesion between the reinforcing metal element and the TPE is excellent. Additionally, due to the absence of any solvent in the coating step the articles according to the invention contain no residual solvents. The corrosion resistance and fatigue behavior of the metal structure embedded in the reinforced TPE is improved.

The reinforced article can be made by conventional, state of the art methods such as extrusion, co-extrusion, injection-molding, compression molding or lamination.

The reinforcing metal element is fully or partially embedded in said reinforced thermoplastic elastomer article.

The invention will be described further by the following examples. Unless otherwise stated the amounts given are in percent by weight.

### Examples

The following abbreviations are used in the examples:
- Santoprene^{R} Rubber, grade 101-87 is a PP/EPDM based product with fully cured EPDM with a durometer Shore A hardness of 87 from Advanced Elastomer Systems, Akron, Ohio;
- Orevac^{R} C and Orevac^{R} 707 OE are maleated polypropylenes from Atochem (containing more than 0.5 % by weight maleic acid);
- Vestamelt^{R} 250 is copolyamide hot-melt from Hüls having a melting point of about 135°C

In the following the invention is demonstrated by way of a steel wire which has been plated on its surface with various platings. Of course, the same results as to the adhesion are achieved with reinforcing elements of other shapes. Various tie-layer adhesives have been tested for the Santoprene S101-87 thermoplastic elastomers. The test method was carried out according to ASTM D2229-93a.

The results obtained are demonstrated in the Tables herein below.

### 1. Samples used

A brass plated wire (60-70% Cu, 30-40% Zn) with a diameter of 0.3 mm was first cleaned and then coated with different kinds of adhesive tie-layer compositions.

### 2. Cleaning

A = none; B = with steam; C = alkaline treatment; D = electromechanical alkaline treatment

### 3. Blends (in wt.-%) used for Coating

| | -1- | -2- | -3- | -4- |
|---|---|---|---|---|
| Orevac 707 OE (18707) | 25 | 50 | | |
| Orevac C | | | 50 | 25 |
| Vestamelt 250 | 75 | 50 | 50 | 75 |

### 4. Molding conditions

Santoprene used: 101-87
Press Temperature: 230°C
Time: 13 min at 50 bars (heating); 4 min at 30 bars (cooling)

### 5. T test (ASTM D2229-93a)

Testing rate: 50 mm/min
Unit: Newton/2 cm of coated wire

| | -1- | -2- | -3- | -4- | Comp. 1 | Comp. 2 |
|---|---|---|---|---|---|---|
| A | 166 (*) | 159 (*) | (144) | 152 (*) | 7 | 71 |
| B | 167 (*) | 142 | 169 (*) | 161 (*) | | |
| C | 167 (*) | 149 | 167 (*) | 143 | | |
| D | 169 (*) | 153 | 170 (*) | 159 (*) | | |

| | | | | | | |
|---|---|---|---|---|---|---|
| (*) wire broken (the adhesion is higher than the wire tensile strength) | | | | | | |

### 6. Comparative Examples

Under the same conditions described above the TPE (Santoprene) was molded directly on the brass plated steel wire (0.3 mm) without any tie-layer being present. The adhesion value measured on 2 cm of the wire was 7 N/2 cm (comparative example 1).

A brass plated steel wire (0.3 mm) was coated with a commercially available solvent based adhesive containing an epoxy modified polypropylene (Morprime^{R} P80 from Morton), dried for 10 minutes at room temperature and then 10 minutes at 200°C. The adhesion value measured on 2 cm of the wire was 71 N/2 cm (comparative example 2).

## Claims

1. A metal element comprising a metal substrate being fully or partially coated with an outer layer comprising
(i) a functionalized polymer containing functional groups selected from carboxylic acids or anhydrides, epoxy groups, amino groups, oxazoline groups and hydroxy groups; and
(ii) a compound selected from copolyamides, copolyesters, and polyamides or blends thereof,
wherein a primer coating is interposed between the surface of the metal substrate and the coating layer comprising (i) and (ii), and wherein the primer coating comprises a compound selected from organo functional silanes, organo functional titanates and organo functional zirconates.

2. The metal element of claim 1, wherein the functionalized polymer is selected from functionalized polyolefins or functionalized block-copolymers of styrene/conjugated diene/styrene, wherein the conjugated diene may be hydrogenated, non-hydrogenated or partially hydrogenated.

3. The metal element of claim 2, wherein the functionalized polymers are obtainable by grafting on the polyolefins or block-copolymers of styrene/conjugated diene/styrene grafting monomers selected from unsaturated carboxylic acids, unsaturated dicarboxylic acids or their derivatives, oxazoline-group containing unsaturated monomers, epoxy-group containing unsaturated monomers, amino- or hydroxy-group containing unsaturated monomers.

4. The metal element of claim 3, wherein the derivatives of the dicarboxylic acid monomers are selected from their anhydrides.

5. The metal element of claim 1, wherein the copolyamides have a number average molecular weight of up to 20,000.

6. The metal element of claim 1 wherein the copolyesters have a number average molecular weight of up to 20,000.

7. The metal element of claim 1, wherein the polyamide is selected from polymers of ∈-caprolactam, aminocaproic acid, enantholactam, 7-amino-heptanoic acid, 11-aminoundecanoic acid, polymers obtained by polycondensation of diamines with dicarboxylic acids, copolymers thereof or blends thereof.

8. The metal element of claim 1 wherein the layer comprising (i) and (ii) contains 10 to 90% by weight of (i) and 90 to 10% by weight of (ii), based on the total amount of (i) and (ii).

9. The metal element of claim 1 wherein the coating layer has a thickness of 5 to 500 µm.

10. The metal element of claim 1 wherein the metal substrate is made of a metal/metal alloy from the group consisting of iron, steel, titanium, aluminum and iron/chromium/nickel.

11. The metal element of claim 10 wherein the steel is a carbon steel or micro-alloyed steel having a carbon content between 0.4 and 1.2% by weight.

12. The metal element of claim 11 wherein the steel is plated with a phosphate coating or a plating selected from brass, Zn, Zn/Al, Zn/Sn, Sn/Zn, Mo and Cr.

13. The metal element of claim 1 wherein the metal substrate is an elongated element.

14. The metal element of claim 13, wherein the metal substrate is selected from the group consisting of a plate, sheet, strip, band, wire, fiber, filament, cord, rope, strand or cable.

15. A method of producing the fully or partially coated metal element as defined in any one of claims 1 to 14 comprising the steps of
(a) optionally cleaning the surface of the uncoated metal substrate;
(b) treating the metal substrate with a primer compound selected from organo functional silanes, organo functional titanates and organo functional zirconates;
(c) solvent-free applying
(i) a functionalized polymer containing functional groups selected from carboxylic acids or anhydrides, epoxy groups, amino groups, oxazoline groups and hydroxy groups; and
(ii) a compound selected from copolyamides, copolyesters, and polyamides or blends thereof;
individually or sequentially or in the form of a blend to the surface of said metal substrate.

16. The method of claim 15 wherein step (c) is carried out by extrusion, coextrusion, dipping or powder coating.

17. An article comprising the metal element as defined in any one of claims 1 to 14 and a thermoplastic elastomer in contact with the outer layer of said metal element.

18. The article of claim 17 wherein the metal element is partially or completely embedded in said thermoplastic elastomer.

19. The article of claim 17 or 18 wherein said metal element forms a reinforcing element.

20. The article according to claim 17 wherein the thermoplastic elastomer is selected from
(A)
(a) a thermoplastic polyolefin homopolymer or copolymer, and
(b) an olefinic rubber which is fully crosslinked, partially crosslinked or not crosslinked, and optionally
(c) common additives;
(B)
(a) a block-copolymer of styrene/conjugated diene/styrene and/or its fully or partially hydrogenated derivative, optionally compounded with
(b) a thermoplastic polyolefin homopolymer or copolymer and/or
(c) common additives
and
(C) any blend of (A) and (B).

21. The article of claim 20 wherein the polyolefin is selected from a homopolymer or copolymer of a C₂₋₇ monomer or a copolymer thereof with (meth)acrylates and/or vinyl acetates.

22. The article of claim 21 wherein the copolymer is a copolymer of ethylene with (meth)acrylates and/or vinyl acetates.

23. The reinforced article of claim 20, wherein the rubber is selected from the group consisting of EPDM rubber, EPM rubber, butyl rubber, halogenated butyl rubber, copolymers of isomonoolefin and para-alkylstyrene or their halogenated derivatives, natural or synthetic rubber, polyisoprene polybutadiene rubber, styrene-butadiene-copolymer rubbers, nitrile rubbers, polychloroprene rubbers and mixtures thereof.

24. The article of claim 23, wherein the block-copolymer of styrene/conjugated diene/styrene contains 10 to 50 weight % of styrene and 90 to 50 weight % of the conjugated diene.

25. The article of claim 20, wherein the conjugated diene is selected from butadiene, isoprene or mixtures thereof.

26. The article of claim 24 or 25, wherein the conjugated diene of the block-copolymer is partially or fully hydrogenated.

27. The article of claim 26, wherein the block-copolymer is compounded with up to 60 weight % of the thermoplastic polyolefin or a common additive or mixtures thereof, based on the total weight of block-copolymer, polyolefin and/or additive.

28. The article of claim 20, wherein the blend (C) comprising (A) and (B) contains 5 to 95 weight % of (A), based on the total weight of (A)+(B).

29. The article of claim 17 being selected from hoses, cables, conveyor-belts, timing-belts, V-belts, hoisting cables, handrails, hose couplings, sheet linings, snap-on profiles, steel wires, steel cords, reinforced elastomer strips, cut-resistant flexible protective strips and heating elements.

30. A method for adhering a thermoplastic elastomer to the surface of a metal substrate comprising solvent-free coating on said surface the (outer) tie-layer as defined in anyone of claims 1 to 14, prior to adhering the coated metal substrate to the thermoplastic elastomer, and wherein the surface of said metal element has been pretreated with a primer compound selected from organo functional silanes, organo functional titanates and organo functional zirconates.

31. The method of claim 30 wherein the coated metal is fully or partially embedded into said thermoplastic elastomer.

32. The method of claim 30 wherein the solvent-free coating is effected by extrusion, co-extrusion, dipping or powder coating.

33. The method of claim 30 wherein the metal substrate is selected from the group consisting of a plate, sheet, strip, band, wire, fiber, filament, cord, rope, strand and cable.

## Patentansprüche

1. Metallelement, umfassend ein Metallsubstrat, das vollständig oder teilweise mit einer Außenschicht beschichtet ist, die
(i) ein funktionalisiertes Polymer, das funktionelle Gruppen enthält, die aus Carbonsäuren oder Carbonsäureanhydriden, Epoxygruppen, Aminogruppen, Oxazolingruppen und Hydroxygruppen ausgewählt sind, und
(ii) eine Verbindung, die aus Copolyamiden, Copolyestern und Polyamiden oder Mischungen derselben ausgewählt ist,
umfasst, worin
eine Primerschicht zwischen der Oberfläche des Metallsubstrats und der (i) und (ii) umfassenden Beschichtungsschicht eingeschoben ist, und worin die Primerschicht eine Verbindung umfasst, die aus organofunktionellen Silanen, organofunktionellen Titanaten und organofunktionellen Zirconaten ausgewählt ist.

2. Metallelement gemäß Anspruch 1, worin das funktionalisierte Polymer aus funktionalisierten Polyolefinen oder funktionalisierten Blockcopolymeren von Styrol/konjugiertes Dien/Styrol ausgewählt ist, worin das konjugierte Dien hydriert, nicht hydriert oder teilweise hydriert sein kann.

3. Metallelement gemäß Anspruch 2, worin die funktionalisierten Polymere erhältlich sind, indem man Pfropfmonomere, die aus ungesättigten Carbonsäuren, ungesättigten Dicarbonsäuren oder deren Derivaten, Oxazolingruppen-enthaltenden, ungesättigten Monomeren, Epoxygruppen-enthaltenden, ungesättigten Monomeren, Amino- oder Hydroxygruppen-enthaltenden, ungesättigten Monomeren ausgewählt sind, auf die Polyolefine oder Blockcopolymere von Styrol/konjugiertes Dien/Styrol pfropft.

4. Metallelement gemäß Anspruch 3, worin die Derivate der Dicarbonsäure-Monomere aus deren Anhydriden ausgewählt sind.

5. Metallelement gemäß Anspruch 1, worin die Copolyamide ein Zahlenmittel der Molmasse von bis zu 20 000 haben.

6. Metallelement gemäß Anspruch 1, worin die Copolyester ein Zahlenmittel der Molmasse von bis zu 20 000 haben.

7. Metallelement gemäß Anspruch 1, worin das Polyamid aus Polymeren von ε-Caprolactam, Aminocapronsäure, Enantholactam, 7-Aminoheptansäure, 11-Aminoundecansäure, Polymeren, die durch Polykondensation von Diaminen mit Dicarbonsäuren erhältlich sind, Copolymeren derselben oder Mischungen derselben ausgewählt ist.

8. Metallelement gemäß Anspruch 1, worin die (i) und (ii) umfassende Schicht 10 bis 90 Gew.-% (i) und 90 bis 10 Gew.-% (ii), bezogen auf die Gesamtmenge von (i) und (ii), enthält.

9. Metallelement gemäß Anspruch 1, worin die Beschichtungsschicht eine Dicke von 5 bis 500 µm hat.

10. Metallelement gemäß Anspruch 1, worin das Metallsubstrat aus Metall/Metall-Legierung besteht, das (die) aus der aus Eisen, Stahl, Titan, Aluminium und Eisen/Chrom/Nickel bestehenden Gruppe ausgewählt ist.

11. Metallelement gemäß Anspruch 10, worin der Stahl ein Kohlenstoffstahl oder ein mikrolegierter Stahl mit einem Kohlenstoffgehalt zwischen 0,4 und 1,2 Gew.-% ist.

12. Metallelement gemäß Anspruch 11, worin der Stahl mit einer Phosphatschicht oder Plattierung überzogen ist, die aus Messing, Zn, Zn/Al, Zn/Sn, Sn/Zn, Mo und Cr ausgewählt ist.

13. Metallelement gemäß Anspruch 1, worin das Metallsubstrat ein längliches Element ist.

14. Metallelement gemäß Anspruch 13, worin das Metallsubstrat aus der aus einer Platte, einem Blech, einem Streifen, einem Band, einem Draht, einer Faser, einem Filament, einer Kordel, einem Seil, einem Strang oder einem Kabel bestehenden Gruppe ausgewählt ist.

15. Verfahren zur Herstellung des vollständig oder teilweise beschichteten Metallelements gemäß irgendeinem der Ansprüche 1 bis 14, das die folgenden Schritte umfasst:
(a) gegebenenfalls die Reinigung der Oberfläche des nicht beschichteten Metallsubstrats;
(b) die Behandlung des Metallsubstrats mit einer Primer-Verbindung, die aus organofunktionellen Silanen, organofunktionellen Titanaten und organofunktionellen Zirconaten ausgewählt ist;
(c) das lösungsmittelfreie Auftragen
(i) eines funktionalisierten Polymers, das funktionelle Gruppen enthält, die aus Carbonsäuren oder Carbonsäureanhydriden, Epoxygruppen, Aminogruppen, Oxazolingruppen und Hydroxygruppen ausgewählt sind, und
(ii) einer Verbindung, die aus Copolyamiden, Copolyestern und Polyamiden oder Mischungen derselben ausgewählt ist,
in individueller oder aufeinander folgender Weise oder in Form einer Mischung auf die Oberfläche des Metallsubstrats.

16. Verfahren gemäß Anspruch 15, worin der Schritt (c) durch Extrusion, Coextrusion, Tauchen oder Pulverbeschichten durchgeführt wird.

17. Gegenstand, umfassend das Metallelement gemäß irgendeinem der Ansprüche 1 bis 14 und ein thermoplastisches Elastomer im Kontakt mit der Außenschicht des Metallelements.

18. Gegenstand gemäß Anspruch 17, worin das Metallelement teilweise oder vollständig in dem thermoplastischen Elastomer eingebettet ist.

19. Gegenstand gemäß Anspruch 17 oder Anspruch 18, worin das Metallelement ein Verstärkungselement bildet.

20. Gegenstand gemäß Anspruch 17, worin das thermoplastische Elastomer aus Folgendem ausgewählt ist:
(A)
(a) einem thermoplastischen Polyolefin-Homopolymer oder -Copolymer, und
(b) einem olefinischen Kautschuk, der vollständig, teilweise oder nicht vernetzt ist, und gegebenenfalls
(c) gebräuchlichen Additiven;
(B)
(a) einem Blockcopolymer von Styrol/konjugiertes Dien Styrol und/oder seinem vollständig oder teilweise hydrierten Derivat, gegebenenfalls kompoundiert mit
(b) einem thermoplastischen Polyolefin-Homopolymer oder -Copolymer, und/oder
(c) gebräuchlichen Additiven;
(C) irgendeiner Mischung von (A) und (B).

21. Gegenstand gemäß Anspruch 20, worin das Polyolefin aus einem Homopolymer oder Copolymer eines C₂₋₇-Monomers oder einem Copolymer desselben mit (Meth)acrylaten und/oder Vinylacetaten ausgewählt ist.

22. Gegenstand gemäß Anspruch 21, worin das Copolymer ein Copolymer von Ethylen mit (Meth)acrylaten und/oder Vinylacetaten ist.

23. Verstärkter Gegenstand gemäß Anspruch 20, worin der Kautschuk aus der Gruppe ausgewählt ist, bestehend aus EPDM-Kautschuk, EPM-Kautschuk, Butylkautschuk, halogeniertem Butylkautschuk, Copolymeren von Isomonoolefin und p-Alkylstyrol oder deren halogenierten Derivaten, natürlichem oder synthetischem Kautschuk, Polyisopren-Polybutadien-Kautschuk, Styrol-Butadien-Copolymer-Kautschuken, Nitrilkautschuken, Polychloropren-Kautschuken und deren Mischungen.

24. Gegenstand gemäß Anspruch 23, worin das Blockcopolymer von Styrol/konjugiertes Dien/Styrol 10 bis 50 Gew.-% Styrol und 90 bis 50 Gew.-% des konjugierten Diens enthält.

25. Gegenstand gemäß Anspruch 20, worin das konjugierte Dien aus Butadien, Isopren oder deren Mischungen ausgewählt ist.

26. Gegenstand gemäß den Ansprüchen 24 oder 25, worin das konjugierte Dien des Blockcopolymers teilweise oder vollständig hydriert ist.

27. Gegenstand gemäß Anspruch 26, worin das Blockcopolymer mit bis zu 60 Gew.-% des thermoplastischen Polyolefins oder eines gebräuchlichen Additivs oder Mischungen derselben, bezogen auf das Gesamtgewicht von Blockcopolymer, Polyolefin und/oder Additiv, kompoundiert ist.

28. Gegenstand gemäß Anspruch 20, worin die (A) und (B) umfassende Mischung (C) 5 bis 95 Gew.-% (A), bezogen auf das Gesamtgewicht von (A)+(B), enthält.

29. Gegenstand gemäß Anspruch 17, der aus Schläuchen, Kabeln, Förderbändern, Synchronriemen, Keilriemen, Förderseilen, Geländerstangen, Schlauchverbindungsstücken, flächenförmigen Auskleidungen, Schnappverschlussprofilen, Stahldrähten, Stahlseilen, verstärkten Elastomerstreifen, schnittfesten, flexiblen Schutzstreifen und Heizelementen ausgewählt ist.

30. Verfahren zum Kleben eines thermoplastischen Elastomers an die Oberfläche eines Metallsubstrats, umfassend das lösungsmittelsfreie Auftragen der (Außen)klebschicht gemäß irgendeinem der Ansprüche 1 bis 14 auf diese Oberfläche, bevor das beschichtete Metallsubstrat an das thermoplastische Elastomer geklebt wird, und worin die Oberfläche des Metallelements mit einer Primer-Verbindung vorbehandelt wurde, die aus organofunktionellen Silanen, organofunktionellen Titanaten und organofunktionellen Zirconaten ausgewählt ist.

31. Verfahren gemäß Anspruch 30, worin das beschichtete Metall vollständig oder teilweise in dem thermoplastischen Elastomer eingebettet wird.

32. Verfahren gemäß Anspruch 30, worin das lösungsmittelfreie Auftragen durch Extrusion, Coextrusion, Tauchen oder Pulverbeschichten durchgeführt wird.

33. Verfahren gemäß Anspruch 30, worin das Metallsubstrat aus der aus einer Platte, einem Blech, einem Streifen, einem Band, einem Draht, einer Faser, einem Filament, einer Kordel, einem Seil, einem Strang und einem Kabel bestehenden Gruppe ausgewählt ist.

## Revendications

1. Elément métallique comprenant un substrat métallique étant totalement ou partiellement recouvert d'une couche externe comprenant
(i) un polymère fonctionnalisé contenant des groupes fonctionnels choisis parmi les acides carboxyliques ou anhydrides, les groupes époxy, les groupes amino, les groupes oxazoline et les groupes hydroxy;et
(ii) un composé choisi parmi les copolyamides, copolyesters et polyamides ou leurs mélanges.
dans lequel un primaire est interposé entre la surface du substrat métallique et la couche de revêtement comprenant (i) et (ii), et dans lequel le primaire comprend un composé choisi parmi les silanes organo fonctionnels, les titanates organo fonctionnels et les zirconates organo fonctionnels.

2. Elément métallique selon la revendication 1, selon lequel le polymère fonctionnalisé est choisi parmi les polyoléfines fonctionnalisées ou les copolymères en bloc fonctionnalisés de styrène/diène conjugué/styrène, selon lequel le diène conjugué peut être hydrogéné, non hydrogéné ou partiellement hydrogéné.

3. Elément métallique selon la revendication 2, selon lequel les polymères fonctionnalisés peuvent être obtenus par greffage sur les polyoléfines ou les copolymères en bloc de styr ène/diène conjugué/styrène de monomères de greffage choisis parmi les acides carboxyliques insaturés, les acides dicarboxyliques insaturés ou leurs dérivés, les monomères insaturés contenant des groupes oxazoline, les monomères insaturés contenant des grou pes époxy, les monomères insaturés contenant des groupes hydroxy.

4. Elément métallique selon la revendication 3, selon lequel les dérivés des monomères d'acide carboxylique sont choisis parmi leurs anhydrides.

5. Elément métallique selon la revendication 1, s elon lequel les copolyamides ont un poids moléculaire moyen de jusqu'à 20 000.

6. Elément métallique selon la revendication 1, selon lequel les copolyesters ont un poids moléculaire moyen de jusqu'à 20 000.

7. Elément métallique selon la revendication 1, selon lequel le polyamide est choisi parmi les polymères d' ε-caprolactame, d'acide aminocaproïque, d'énantholactame, d'acide 7 -amino-heptanoïque, d'acide 11 -aminoun-décanoïque, les polymères obtenus par polycondensation de diamines avec des acides dicarboxyliqu es, leurs copolymères ou leurs mélanges.

8. Elément métallique selon la revendication 1, selon lequel la couche comprenant (i) et (ii) contient 10 à 90% en poids de (i) et 90 à 10% en poids de (ii), sur la base de la quantité totale de (i) et (ii).

9. Elément métallique selon la revendication 1, selon lequel la couche de revêtement a une épaisseur de 5 à 500 µm.

10. Elément métallique selon la revendication 1, selon lequel le substrat métallique est fait d'un alliage métal/métal choisi dans le groupe constitué par le fer, l'acier, le titane, l'aluminium et le fer/chrome/nickel.

11. Elément métallique selon la revendication 10, selon lequel l'acier est un acier au carbone ou un acier micro-allié ayant une teneur en carbone comprise entre 0,4 et 1,2% en poids.

12. Elément métallique selon la revendication 11, selon lequel l'acier est recouvert d'un revêtement de phosphate ou d'un placage choisi parmi le laiton, Zn, Zn/Al, Zn/Sn, Sn/Zn, Mo et Cr.

13. Elément métallique selon la revendication 1, selon lequel le substrat métallique est un élément allongé.

14. Elément métallique selon la revendication 13, selon lequel le substrat métallique est choisi parmi le groupe constitué d'une plaque, d'une feuille, d'une bande, d'un fil, d'une fibre, d'un filament, d'un cordon, d'une corde, d'un toron ou d'un câble.

15. Méthode pour produire l'élément métallique totalement ou partiellement recouvert comme défini dans l'une quelconque des revendications 1 à 14 comprenant les étapes de
(a) nettoyage, éventuellement, de la surface du substrat métallique non enduit;
(b) traitement du substrat métallique avec un primaire choisi parmi les silanes organo -fonctionnels, les titanes organo-fonctionnels et les zirconates organo-fonctionnels;
(c) application sans solvant de
(i) un polymère fonctionnalisé contenant des groupes fonctionnels choisis parmi les acides carboxliques ou les anhydrides, les groupes époxy, les groupes amino, les groupes oxazoline et les groupes hydroxy; et
(ii) un composé choisi parmi les copolyamides, copolyesters et polyamides ou leurs mélanges;
individuellement ou séquentiellement ou sous forme d'un mélange sur la surface dudit substrat métallique.

16. Méthode selon la revendication 15, selon lequel l'étape (c) est effectuée par extrusion, co -extrusion, immersion ou revêtement par une poudre.

17. Article comprenant l'élément métallique comme défini dans l'une quelconque des revendications 1 à 14 et un élastomère thermoplastique en contact avec la couche externe dudit élément métallique.

18. Article selon la revendication 17, selon lequel l'élément métallique est partiellement ou complètement enfoui dans ledit élastomère thermoplastique.

19. Article selon la revendication 17 ou 18, selon lequel l'élément métallique forme un élément de renfort.

20. Article selon la revendication 17, selon lequel l'élastomère thermoplastique choisi parmi
(A) (a) un homopolymère ou copolymère de polyoléfines thermoplastiques, et
(b) un caoutchouc oléfinique qui est totalement réticulé, partiellement réticulé ou non réticulé, et éventuellement
(c)des additifs courants;
(B)
(a) un copolymère en bloc de styrène/diène conjugué/styrène et/ou son dérivé totalement ou partiellement hydrogéné, éventuellement combiné à
(b) un homopolymère ou copolymère de polyoléfines thermoplastiques et/ou
(c) des additifs courants
et
(C) tout mélange de (A) et (B).

21. Article selon la revendication 20, selon lequel la polyoléfine est choisie parmi un homopolymère ou un copolymère d'un monomère C₂₋₇ ou un copolymère de celui-ci avec des (méth)acrylates et/ou des acétates de vinyle.

22. Article selon la revendication 21, selon lequel le copolymère est un copolymère d'éthylène avec des (méth)acrylates et/ou des acétates de vinyle.

23. Article renforcé selon la revendication 20, selon lequel le caoutchouc est choisi parmi le groupe constitué par le caoutchouc EPDM, le caoutchouc EPM, le caoutchouc butyle, le caoutchouc butyle halogéné, les copolymères d'isomonooléfine et de para-alkylstyrène ou leurs dérivés halogénés, le caoutchouc naturel ou synthétique, le caoutchouc polyisoprène polybutadiène, les caoutcho ucs styrène-butadiène-copolymère, les caoutchoucs nitrile, les caoutchoucs polychloroprène et leurs mélanges.

24. Article selon la revendication 23, selon lequel le copolymère en bloc de styrène/diène conjugué/styrène contient 10 à 50% en poids de styrène et 9 0 à 50% en poids du diène conjugué.

25. Article selon la revendication 20, selon lequel le diène conjugué est choisi parmi le butadiène, l'isoprène ou leurs mélanges.

26. Article selon la revendication 24 ou 25, selon lequel le copolymère en bloc est partielleme nt ou totalement hydrogéné.

27. Article selon la revendication 24 ou 25, selon lequel le copolymère en bloc est mélangé avec jusqu'à 60 pour cent en poids de la polyoléfine thermoplastique ou d'un additif courant ou de leurs mélanges, sur la base du poids tot al du copolymère en bloc, de la polyoléfine et/ou de l'additif.

28. Article selon la revendication 20, selon lequel le mélange (C) comprenant (A) et (B) contient 5 à 95 % en poids de (A), sur la base du poids total de (A) + (B).

29. Article selon la revendication 17 étant choisi parmi les tuyaux souples, les câbles, les courroies transporteuses, les courroies de distribution, les courroies en V, les câbles de levage, les mains courantes, les raccords de tuyaux, les garnissages en feuilles, les éléments à fermetur e immédiate, les fils d'acier, les cordons d'acier, les bandes d'élastomère, les bandes de protection flexibles résistantes à la découpe et les éléments de chauffage.

30. Méthode pour faire adhérer un élastomère thermoplastique sur la surface d'un substrat mé tallique comprenant le revêtement sans solvant de ladite surface sur une couche (externe) de liaison comme définie dans l'une quelconque des revendications 1 à 14, avant de faire adhérer le substrat métallique recouvert à l'élastomère thermoplastique, et s elon laquelle la surface dudit élément métallique a été prétraitée avec un composé primaire choisi parmi les silanes organo fonctionnels, les titanates organo fonctionnels et les zirconates organo fonctionnels.

31. Méthode selon la revendication 30, selon laquelle le métal recouvert est totalement ou partiellement enfoui dans ledit élastomère thermoplastique.

32. Méthode selon la revendication 30, selon laquelle l'application du revêtement sans solvant est effectuée par extrusion, co -extrusion, immersion ou couch e de poudre.

33. Méthode selon la revendication 30, selon laquelle le substrat métallique est choisi parmi le groupe constitué d'une plaque, d'une feuille, d'une bande, d'un fil, d'une fibre, d'un filament, d'un cardon, d'une corde, d'un toron ou d'un câble.
